# EUROPEAN PATENT APPLICATION

(11) **EP 0 638 953 A1**
(43) Date of publication of application: **15.02.1995**
(21) Application number: 94305758.8
(22) Date of filing: 03.08.1994
(51) Int. Cl.: H01P 1/203

(54) **LC-type dielectric filter and duplexer**

(30) Priority: 09.08.1993 JP 197364/93
(71) Applicant: Oki Electric Industry Co., Ltd., Tokyo (JP)
(72) Inventor: Horii, Hiroyuki, c/o Oki Electric Ind. Co., Ltd., Tokyo (JP); Shimizu, Kohichiro, c/o Oki Electric Ind. Co. Ltd., Tokyo (JP); Yasuoka, Toshikazu, c/o Oki Electric Ind. Co. Ltd., Tokyo (JP); Iwata, Masao, c/o Oki Electric Ind. Co., Ltd., Tokyo (JP); Gunji, Katsuhiko, c/o Oki Electric Ind. Co., Ltd., Tokyo (JP); Komazaki, Tomokazu, c/o Oki Electric Ind. Co. Ltd., Tokyo (JP)
(74) Representative: Boydell, John Christopher

(57) **Abstract**

An LC-type dielectric filter and a duplexer are disclosed. The filter (10) comprises a multilayer substrate. Each layer (2, 4 and 6) has a strip line resonator (21, 41 and 61). The filter has a plurality of terminals (11, 12 and 13) which are connected to each of the resonators. The terminals are capacitively or inductively coupled to each other. The filter further comprises at least one grounding layer (3, 5) for electrically insulating the resonators.

Overcoupling between the resonators can be obtained by forming a plurality of resonators on the same substrate closely. Further, a duplexer having this type of filter can be formed. The duplexer additionally has a matching circuit and has a power amplifier for RF transmission.

## Description

This invention relates to a band-pass filter and in particular to a band-pass filter formed by a plurality of LC-type resonators on a dielectric substrate. Such filters are used in, for example, portable telephones or mobile telephone terminals. The invention also relates to a duplexer using such an LC-type dielectric filter.

The dielectric filter used as a band-pass filter is used in mobile or portable telephone subscriber terminals. A typical conventional dielectric filter comprises a substantially rectangular dielectric block. A plurality of resonators extend from a top surface to a bottom surface of the dielectric block. Such a dielectric filter is disclosed in United States Patent No. 4,431,977, "Ceramic Band Pass Filter" or Japanese Koukoku publication No. 62-57122, "Dielectric Filter". Such types of dielectric filter need a plurality of resonant holes, and the inner surface of the respective resonant holes has to be metallised. Another known type of band-pass filter has a dielectric substrate, strip line resonators disposed on the substrate, and a coupling circuit to connect between the resonators. Such type of filter is disclosed in Japanese Laid-Open Patent No. 62-164301, or No. 3-173201. To manufacture this type of filter, a similar process to printed-circuit-board-manufacturing process can be adopted. Accordingly, compared to the rectangular type of dielectric filter, it is easier to manufacture. Further, this type of filter is suitable to manufacture small-sized filter. However, because a plurality of resonators are on the same dielectric substrate, floating capacitance can occur between each resonator, and thus the stability of the coupling circuit becomes poor.

The present invention seeks to provide a small-sized LC-type dielectric filter which can prevent occurrence of floating capacitance between each resonator.

The invention further seeks to provide a small-sized duplexer using the LC-type dielectric filter. Therefore, as briefly described, the present invention is an LC-type dielectric filter comprising a multi-layer substrate formed by a plurality of dielectric layers and at least one grounding layer, each of dielectric layer having a resonator and the grounding layer is disposed between the plurality of dielectric plates; an input terminal and an output terminal, each is disposed on the substrate, and a coupling circuit for coupling between each of the resonators.

In order that the invention may be better understood, several embodiments thereof will now be described by way of example only and with reference to the accompanying drawings in which:-
Figure 1 is a perspective view of an embodiment of the LC-type dielectric filter of this invention;
Figure 2 shows every layer of a multi-layer substrate used in this invention;
Figure 3 shows an example of layout pattern of the strip line for the resonator;
Figure 4 shows another structure of the LC-type dielectric filter;
Figure 5 is an equivalent circuit of the dielectric filter shown in Figure 1;
Figure 6 shows another example of the coupling circuit;
Figure 7 shows another embodiment of LC-type dielectric filter;
Figure 8 is an equivalent circuit of the filter shown in Figure 7;
Figure 9 shows a third embodiment of this invention; and
Figure 10 shows a fourth embodiment of this invention.

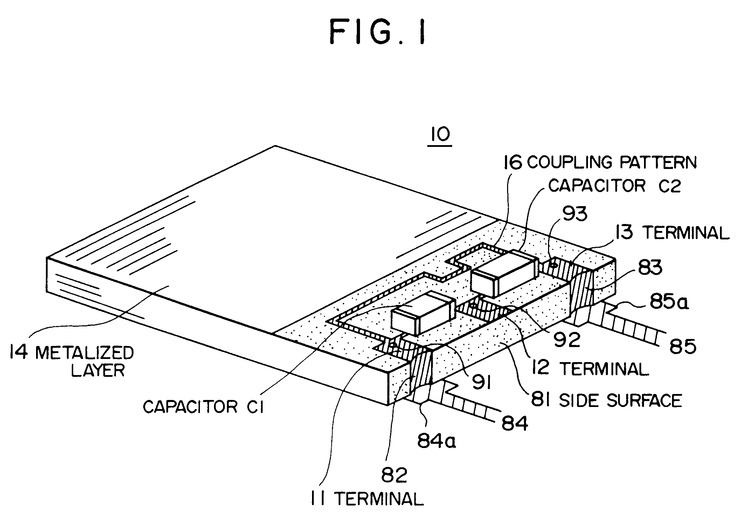

Figure 1 shows a perspective view of an embodiment of the LC-type dielectric filter of this invention. A filter 10 has a multi-layer substrate which is of substantially rectangular shape. A bottom surface, three side surfaces and a portion of an upper surface is metallised by metallised layer 14. The remaining portion of the upper surface and side surface 81 are bare dielectric material. Terminals 11, 12 and 13 are disposed on a bare portion of the upper surface. These terminals are formed by metallising a conductive material on the bare portion. Each terminal has a through-hole. In Figure 1, three through-holes 91, 92 and 93 are disclosed. The terminal 11 and the terminal 12 are coupled with capacitor C1. Thus, the terminals 11 and 12 are capacitively coupled. Similarly, the terminal 12 and the terminal 13 are coupled with capacitor C2 and thus the terminal 12 and the terminal 13 are capacitively coupled. The terminal 11 and the terminal 13 are coupled by the coupling pattern 16. On the side surface 81, there are two recesses 82 and 83. The recess 82 is located corresponding to the terminal 11, and the recess 83 is located corresponding to the terminal 13. The inner wall of each recess 82 and 83 is metallised. At the bottom surface of the filter 10, a portion of the metallised layer 14 is omitted so as to avoid short circuiting between the metallised layer 14 and the metallised layer on the recesses 82 and 83. The filter 10 is mounted on a circuit board (not shown). Printed patterns 84 and 85 on the printed circuit board are connected to the terminals 11 and 13 respectively, through the recesses 82 and 83. Mounting pad 84a of the printed pattern 84 and the recess 82 are soldered. Similarly, mounting pad 85a of the printed pattern 85 and the recess 83 are soldered.

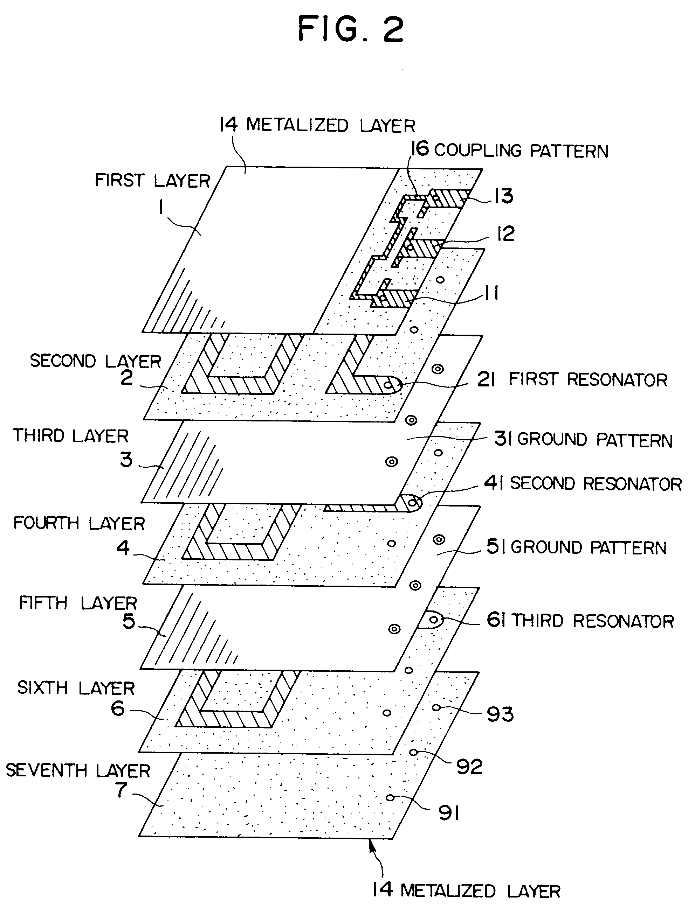

Every layer of the multi-layer substrate of this invention are shown in Figure 2. As shown in Figure 2, the filter 10 has seven layers, namely, from a first layer 1 to a seventh layer 7. Each layer is formed by dielectric substrate. As for layers through 1 to 6, all substrate has bare dielectric lower surface. The lower surface of the seventh layer corresponds to the bottom surface of the filter 10. The lower surface of the seventh layer 7 is substantially covered by the metallised layer 14. However, the metallised layer around the three through-holes is omitted to avoid short-circuiting, while the upper surface of the seventh layer is completely bare dielectric material. The following explanation is about upper surfaces of dielectric substrates through 1 to 6. A first layer corresponds to the upper surface of the filter 10. As stated above, the terminals 11, 12 and 13, the metallised layer 14 and the coupling pattern 16, are on the upper surface. A first resonator 21 is on a second layer 2 by forming a conductive material on the second layer 2. The first resonator 21 is connected to the terminal 11 by the through-hole 91. A third layer 3 is a ground layer. Almost all the surface except an area around the through-hole 91 is covered by a ground pattern 31 to avoid short-circuiting. On the surface of the fourth layer, there is a second resonator 41. The second resonator 41 is also formed by metallising. The second resonator 41 is connected to the terminal 12 by the through-hole 92. The surface of the fifth layer 5, similar to the third layer 3, is covered by a ground pattern 51. On the surface of the sixth layer 6, there is a third resonator 61. The third resonator 61 is connected to the terminal 13 by the through-hole 93. The filter 10 is made by laminating these seven dielectric substrates. After laminating, three side surfaces except side surface 81 is metallised, thus the filter 10 is obtained. Both the ground patterns 31 and 51 are connected to the metallised layer 14. As a result, the upper surface, the bottom surface, the three side surfaces are maintained at ground. Further, the ground patterns 31 and 51 are also maintained at ground. To connect the metallised layer 14 to the ground patterns 31 and 51, for example, direct connecting or using a through-hole, can be adopted. The through-holes 91, 92 and 93 connect the terminals to the resonators. Therefore, it is not necessary for the through-holes to penetrate all layers, but to connect the resonator to the corresponding terminal.

As explained above, the filter 10 has terminals 11 to 13, and resonators connected to the respective terminals. The first resonator 21 is disposed between the metallised layer 14 and the ground pattern 31. The second resonator 41 is disposed between the ground pattern 31 and the ground pattern 51. The third resonator 61 is disposed between the ground pattern 51 and the metallised layer 14. Thus, all resonators are electrically insulated from each other. And, for example, the first resonator 21 is capacitively coupled to the metallised layer 14 via the dielectric material of the first layer 1. And also, it is capacitively coupled to the ground pattern 31 via the dielectric material of the second layer 2. Similar relationship can be seen between the second resonator 41 and the third resonator 61. Therefore, each resonator functions as a kind of tri-plate strip line filter.

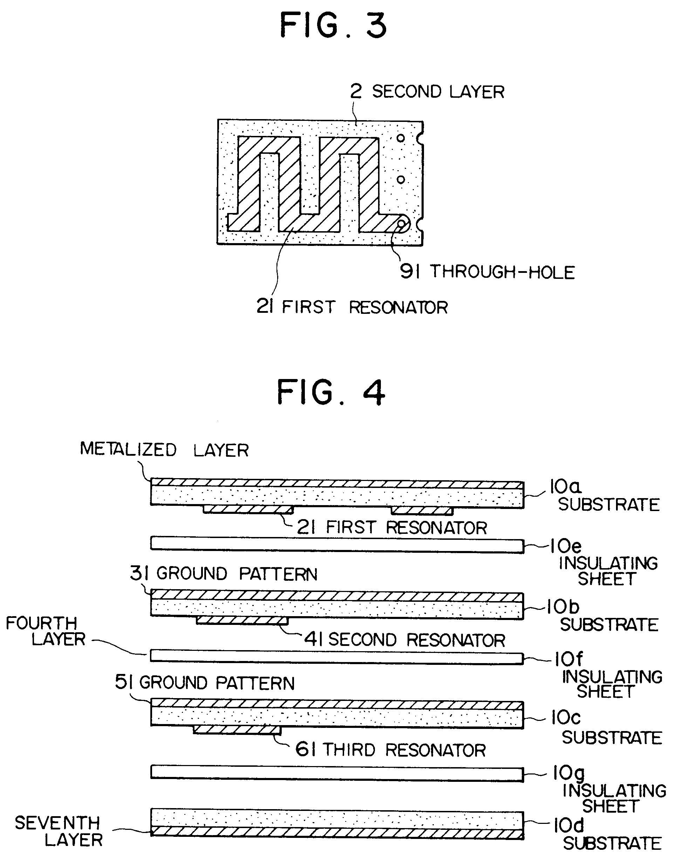

Figure 3 shows an example of a layout pattern for constituting a resonator. Here, the resonators are represented by the first resonator 21 on the second layer 2. The resonator 21 is formed as a metallised pattern which is metallised on the second layer 2. Although the pattern shown in Figure 3 is zig-zag shaped, the shape of the resonator is not necessarily restricted as shown in Figure 3 as long as a relationship between the length of the resonator and the frequency is satisfied. For example, when making a half-wavelength resonator, the length of each resonator is determined to 1/2 wavelength of the resonant frequency, and opposite end to the terminal is made open. It will be understood that a resonator shown in Figure 3 is a 1/2 wavelength resonator, since the opposite end is open. While, when making a quarter-wavelength resonator, the length of each resonator is determined to 1/4 wavelength of the resonant frequency, and opposite side to the terminal is made short-circuited. For the short-circuiting, the opposite end to the terminal should be connected to the metallised layer 14, directly or via a through-hole. Thus, both a 1/2 wavelength resonator and a 1/4 wavelength resonator can be constituted. A ground pattern can be metallised around each resonator. It can prevent occurrence of floating capacitance.

When applying an input signal to the terminal 11, this input signal is transferred to the first resonator 21 via the through-hole 91. The first resonator 21 resonates at a predetermined frequency. Next, the signal is transmitted to the adjacent terminal 12 via the capacitor C1. Thus, the second resonator 41 resonates. Finally, the signal is transmitted to the terminal 13 via the capacitor C2 and the third resonator 61 resonates. As a result, a frequency filter is achieved by coupling each resonator by capacitor.

Another embodiment of the filter is shown in Figure 4. As shown in Figure 4, four dielectric substrates 10a, 10b, 10c and 10d constitute a multilayer substrate. A first layer has a metallised upper surface. This metallised upper surface corresponds to the metallised layer 14 in Figure 1. On a lower surface of the substrate 10a, a first resonator 21 is metallised. A ground pattern 31 is formed on an upper surface of the substrate 10b. A second resonator 41 is formed on the lower surface of the substrate 10b. The third layer (the substrate 10c) has a ground pattern 51 on the upper surface, and has a third resonator 61 on the lower surface. The substrate 10d has a metallised pattern on the lower surface, which corresponds to the metallised layer 14, while the upper surface of the substrate 10d is bare dielectric. Patterns of each layer are the same as that shown in Figure 1. Insulating sheets 10e, 10f and 10g are disposed between each of the substrates to avoid short-circuiting. The insulating sheets contain epoxy or polyimide mainly and insulates each layer. In this embodiment, however, insulating sheet 10g is not necessary from the aspect of insulation. Thus a filter is obtained by laminating these dielectric substrates and insulating sheets. This embodiment can reduce the number of substrates. In this embodiment, each resonator also functions as a tri-plate type strip line filter. For example, the first resonator 21 is coupled to the metallised layer 14 via the dielectric substrate 10a. The first resonator 21 is also coupled to the ground pattern 31 via the dielectric substrate 10b. Similar explanation can be applied to the other resonators.

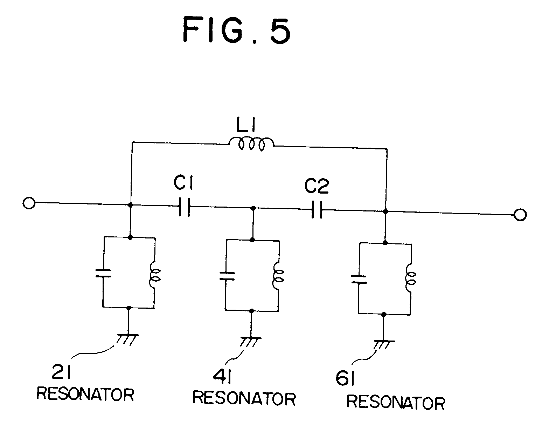

Figure 5 shows an equivalent circuit of such an LC-type dielectric filter. Each resonator functions as distributed constant type resonators, and each resonator is coupled to each other by the capacitor C1 and C2. Further, the resonator 21 and the resonator 23 are directly coupled by an inductance L1 which is generated by the coupling pattern 16.

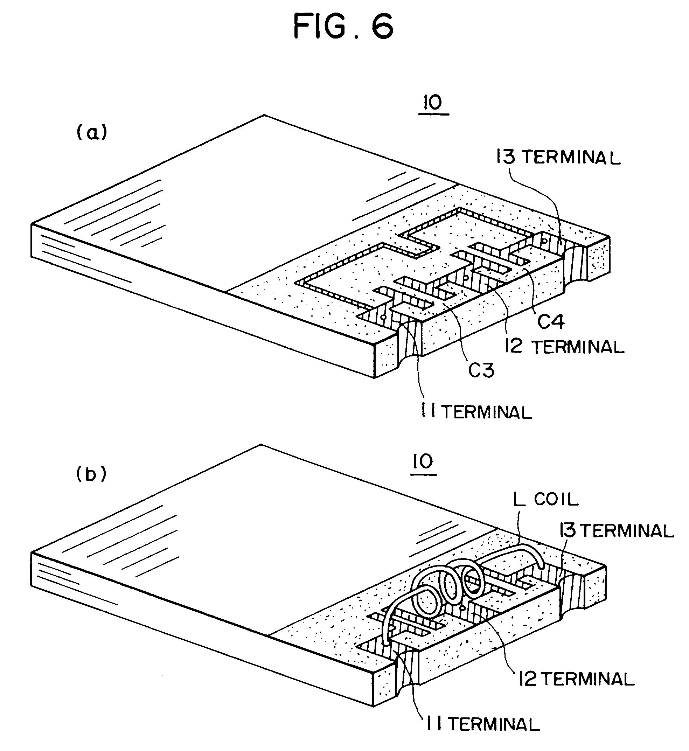

Figure 6 shows another example of the coupling circuit. Figure 6(a) discloses a capacitor coupling. Such capacitors C3 and C4 are achieved by a metallised pattern on the remaining (bare dielectric) portion of the upper surface of the filter 10, while Figure 6(b) discloses an inductance coupling. Namely, the terminal 11 and the terminal 13 are connected directly by coil L. Both configurations of Figure 6(a) or Figure 6(b) can be shown as an equivalent circuit of Figure 5. As explained above, one resonator is formed on one dielectric substrate, and then constituting a multi-layer substrate by laminating a plurality of such dielectric substrate. Electrical interference between each resonator can be avoided, since each resonator is electrically insulated by the ground pattern.

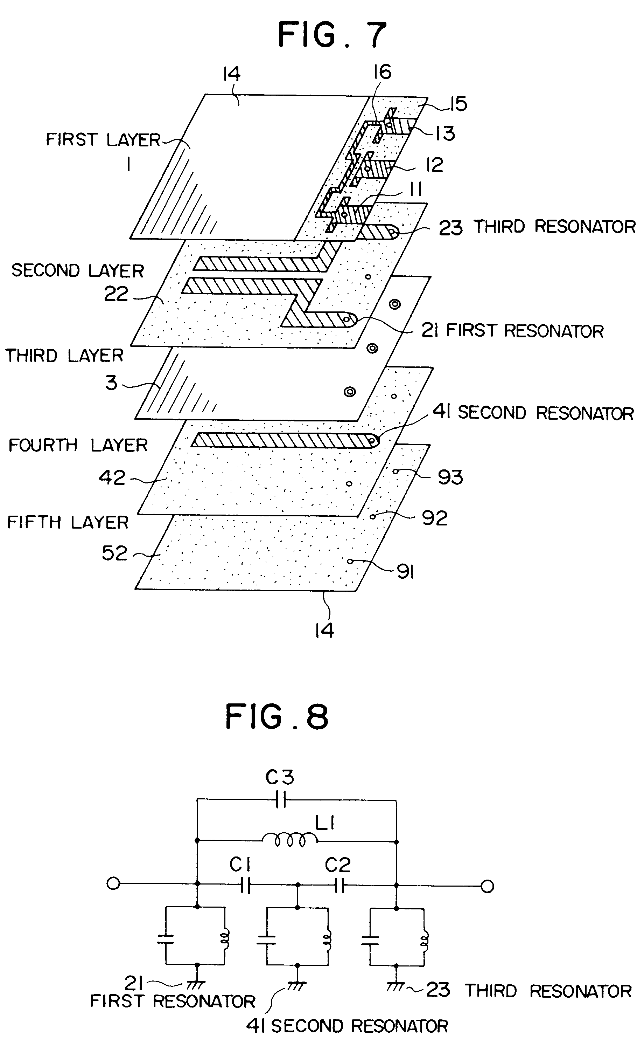

Figure 7 sows another embodiment of this invention. In this embodiment, a floating capacitance between the resonators is positively utilised by forming a plurality of resonators on the same substrate. Specific configuration will be explained below. The same reference numerals are used for the same elements. As shown in Figure 7, the filter 10 has five layers, namely, from a first layer 1 to a fifth layer 52. Each layer is formed by dielectric substrate. As for layers through 1 to 4, all substrates have bare dielectric lower surfaces. The lower surface of the fifth layer corresponds to the bottom surface of the filter 10. The lower surface of the fifth layer 5 is substantially covered by the metallised layer 14. However, the metallised layer around the three through-holes is omitted to avoid short-circuiting. While the upper surface of the fifth layer is completely bare dielectric material. The following explanation is about upper surfaces of dielectric substrates through 1 to 4. A first layer 1 corresponds to the upper surface of the filter 10. As stated above, the terminals 11, 12 and 13, the metallised layer 14 and the coupling pattern 16 are on the upper surface. A first resonator 21 is provided on a second layer 22 by forming a conductive material. The first resonator 21 is connected to the terminal 11 by the through-hole 91. A third layer 3 is a ground layer. Almost all surface except an area around the through-hole 91 of the third layer is covered by a ground pattern 31 to avoid short-circuiting. On the surface of the fourth layer 4, there is a second resonator 41. The second resonator 41 is also formed by metallising. The second resonator 41 is connected to the terminal 12 by the through-hole 92. A third resonator 23 is on the second layer 22. A third resonator 23 is connected to the terminal 13 by the through-hole 93. The filter 10 is obtained by laminating the layers. The resonators 21 and 23 and disposed closely. Thus, capacitive coupling occurs between these resonators.

Figure 8 shows an equivalent circuit of the second embodiment. In the figure, the first resonator 21 and the second resonator 41 are coupled by the capacitor C1, and the second resonator 41 and the third resonator 23 are coupled by the capacitor C2. An overcoupling is occurred by an inductance L1, which is the metallised pattern 16. In addition to the coupling by L1, further coupling by C3 occurs between the first resonator 21 and the third resonator 23. As explained above, a floating capacitance is positively utilised in this embodiment. Such configuration requires consideration about the floating capacitance at the time of design, but more sharp characteristics can be obtained.

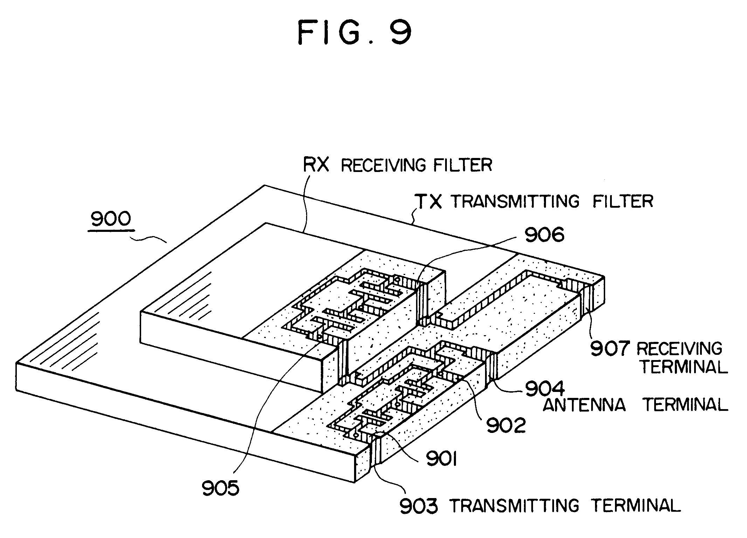

The third embodiment of this invention is shown in Figure 9. In Figure 9 a duplexer 900 is disclosed. The duplexer 900 has a transmitting filter TX and a receiving filter RX on the transmitting filter TX. Configuration of each filter is substantially the same as that of the filter shown in Figures 1 or 2. The transmitting filter TX has an input terminal 901 and an output terminal 902. The input terminal 901 is connected to a transmitting circuit (not shown) via a transmitting terminal 903, and the output terminal 902 is connected to an antenna (not shown) via an antenna terminal 904. The receiving filter has an input terminal 905 and an output terminal 906. The input terminal 905 is connected to the antenna via the antenna terminal 904. The output terminal 906 is connected to a receiving circuit (not shown) via a receiving terminal 907. For the transmitting terminal 904, antenna terminal 905, and receiving terminal 907, appropriate recesses are formed on a side surface of the transmitting filter TX. These terminals are connected to metallised patterns on a printed circuit board (not shown) on which the duplexer 900 is mounted. Receive signal from base station is received at the antenna, and then fed to the input terminal 905 of the receiving filter RX. Signals within a predetermined frequency range pass the receiving filter RX and then being applied to the receiving circuit via the output terminal 907. While transmit signal generated at the transmitting circuit is applied to the input terminal 901 of the transmitting filter TX. This signal is filtered at the transmitting filter TX and then fed to the antenna, via the output terminal 902 and the antenna terminal 904. The duplexer 900 has a separating circuit. The separating circuit comprises a metallised pattern between the antenna terminal 904 and the input terminal 905, and a metallised pattern between the antenna terminal 904 and the output terminal 902. The separating circuit allows the receive signal to go through from the antenna terminal 904 to the input terminal 905, and disallows to go through from the antenna terminal to the output terminal 902. The separating circuit also allows the transmit signal to go through from the output terminal 902 to the antenna terminal 904 and disallows to go through from the output terminal 902 to the input terminal 905. To obtain such separating circuit, distance between each terminal is determined appropriately. Since many references have disclosed a method for obtaining such separating circuits by metallising, no further explanation about separating circuits is described hereinafter. Such embodiment can reduce a number of parts, or a size of the duplexer. Though the transmitting filter TX and the receiving filter RX are separate in this embodiment, a duplexer, having both transmitting and receiving filters in the same multi-layer substrate, can be obtained. Further, either the transmitting filter TX or the receiving filter RX can be replaced to another type of frequency filter, for example, surface acoustic wave (SAW) filter.

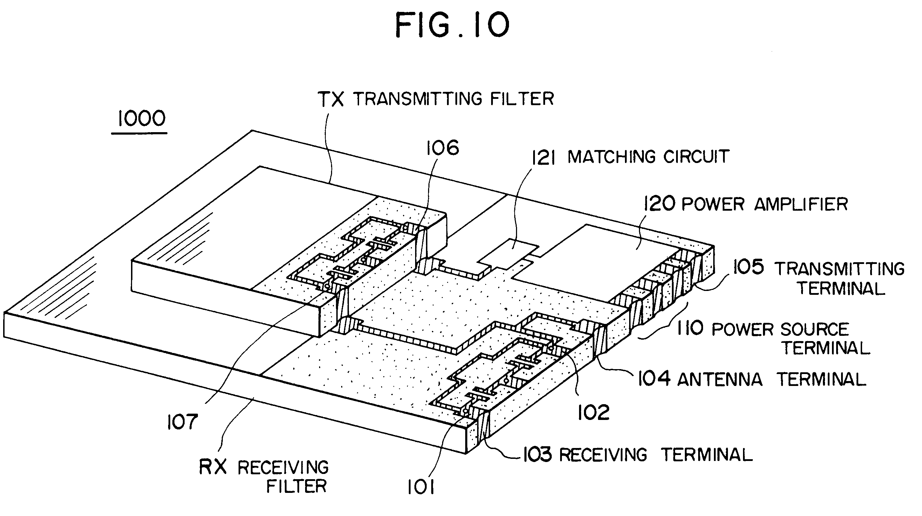

The fourth embodiment of this invention is shown in Figure 10. The duplexer shown in Figure 10 comprises a power amplifier and a matching circuit in addition to the transmitting filter and the receiving filter Basic construction of the fourth embodiment is substantially the same as that of the third embodiment, and the power amplifier and the matching circuit are especially explained hereinafter. The duplexer 1000 comprises a receiving filter RX. The receiving filter RX comprises an output terminal 101 and an input terminal 102. The duplexer 1000 also comprises a transmitting filter TX on the receiving filter RX. The transmitting filter TX comprises an input terminal 106 and an output terminal 107. The duplexer 1000 comprises a receiving terminal 103, antenna terminal 104, transmitting terminal 105 and power source terminals 110 at the side of the receiving filter RX. The receiving terminal 103 is connected to the input terminal 101. The antenna terminal 104 is connected to the input terminal 102 and the output terminal 107. The transmitting terminal 105 is connected to the power amplifier 120. The power source terminals 110 are also connected to the power amplifier 120. Similar to the third embodiment, appropriate separating circuit is disposed. The power amplifier 120 is disposed on the upper surface of the receiving filter RX. The power amplifier 120 amplifies transmit signal applied from the transmitting circuit, and the amplified transmit signal is fed to the matching circuit 121. Power source for the power amplifier 120 is applied via the power source terminals 110. The matching circuit 121 matches impedance between the transmitting circuit and the antenna. For example, an antenna impedance from the transmitting circuit is determined 50 OHMS in portable telephone subscriber terminal. The power amplifier 120 and the matching circuit 121 can be constructed directly on the upper surface of the receiving filter RX, or can be constructed as a separate module.

## Claims

1. An LC-type dielectric filter comprising:
a multi-layer substrate formed by a plurality of dielectric layers and at least one grounding layer, each of the dielectric layers having a resonator and the grounding layer is disposed between the plurality of dielectric plates;
an input terminal and an output terminal, each is disposed on the substrate; and
a coupling circuit for coupling between each of the resonators.

2. An LC-type dielectric filter comprising:
a multi-layer substrate including:
an input substrate having an input resonator;
an output substrate having an output resonator;
at least one intermediate substrate having an intermediate resonator; and
at least one grounding layer disposed between the plurality of substrates;
an input means coupled to the input resonator;
an output means coupled to the output resonator; and
coupling means for coupling each of the resonators.

3. An LC-type dielectric filter according to claim 2, wherein the coupling means includes a reactance element disposed between the adjacent resonator.

4. An LC-type dielectric filter according to claim 2, wherein the coupling means includes:
a first coupler for coupling adjacent resonators; and
a second coupler for coupling non-adjacent resonators.

5. An LC-type dielectric filter according to claim 2, wherein the input means includes an input terminal and a through-hole which couples the input terminal and the input resonator.

6. An LC-type dielectric filter according to claim 2, wherein the output means includes an output terminal and a through-hole which couples the output terminal and the output resonator.

7. An LC-type dielectric filter according to claim 2, wherein the resonators are strip-line resonators which are formed on each substrate.

8. An LC-type dielectric filter comprising:
a multi-layer substrate which comprises:
an input substrate having an input resonator;
an output substrate having an output resonator;
at least one intermediate substrate having an intermediate resonator; and
a plurality of grounding layer disposed between each of the plurality of substrates;
an input means coupled to the input resonator;
an output means coupled to the output resonator; and
coupling means for coupling each of the resonators.

9. An LC-type dielectric filter according to claim 8, wherein the coupling means includes a reactance element disposed between the adjacent resonator.

10. An LC-type dielectric filter according to claim 8, wherein the coupling means includes:
a first coupler for coupling adjacent resonators; and
a second coupler for coupling non-adjacent resonators.

11. An LC-type dielectric filter according to claim 8, wherein the input means includes an input terminal and a through-hole which couples the input terminal and the input resonator.

12. An LC-type dielectric filter according to claim 8, wherein the output means includes an output terminal and a through-hole which couples the output terminal and the output resonator.

13. An LC-type dielectric filter according to claim 8, wherein the resonators are strip-line resonators which are formed on each substrate.

14. An LC-type dielectric filter having a multi-layer substrate comprising:
an input resonator disposed on an input layer;
an output resonator disposed on an output layer;
at least one intermediate resonator; and
at least one grounding layer disposed between the resonators;
wherein at least one of the resonators is disposed on the same layer which has another resonator thereon, whereby an overcoupling between these resonators is obtained.

15. An LC-type dielectric filter having a multi-layer substrate comprising:
an input resonator disposed on an input layer;
an output resonator disposed on an output layer;
at least one intermediate resonator; and
a plurality of grounding layers disposed between each of the resonators;
wherein at least one of the resonators is disposed on the same layer which has another resonator thereon, whereby an overcoupling between these resonators is obtained.

16. A duplexer having a transmitting filter means and a receiving filter means, wherein at least either the transmitting filter means or the receiving filter means including an LC-type dielectric filter, the filter comprising:
an input substrate having an input resonator;
an output substrate having an output resonator;
at least one intermediate substrate having an intermediate resonator; and
at least one grounding layer disposed between the plurality of substrates;
an input means coupled to the input resonator;
an output means coupled to the output resonator; and
a coupling means for coupling each of the resonators.

17. A duplexer having a transmitting filter means and a receiving filter means, wherein at least either the transmitting filter means or the receiving filter means including an LC-type dielectric filter, the filter comprising:
a multi-layer substrate which comprises:
an input substrate having an input resonator;
an output substrate having an output resonator;
at least one intermediate substrate having an intermediate resonator; and
a plurality of grounding layers disposed between each of the plurality of substrates;
an input means coupled to the input resonator;
an output means coupled to the output resonator; and
a coupling means for coupling each of the resonators.

18. A duplexer having a transmitting filter means and a receiving filter means, wherein at least either the transmitting filter means or the receiving filter means including an LC-type dielectric filter, the filter comprising:
a multi-layer substrate formed by a plurality of dielectric layers and at least one grounding layer, each of dielectric layers having a resonator and wherein the grounding layer is disposed between the plurality of dielectric plates;
an input terminal and an output terminal, each is disposed on the substrate;
a coupling circuit for coupling between each of the resonators;
a matching circuit for impedance matching a transmitting signal and an antenna; and
an amplifier circuit for amplifying the transmitting signal.
